# EUROPEAN PATENT APPLICATION

(11) **EP 2 208 568 A1**
(43) Date of publication of application: **21.07.2010**
(21) Application number: 09405013.5
(22) Date of filing: 20.01.2009
(51) Int. Cl.: B23K 26/06, B23K 26/14

(54) **Apparatus and method for processing material by means of laser**

(71) Applicant: SYNOVA S.A., 1024 Ecublens (CH)
(72) Inventor: Lee, Kyumin, 1022 Chavannes-Renens (CH); Pauchard, Alexandre, 1618 Chatel-St.-Denis (CH)
(74) Representative: Roshardt, Werner Alfred

(57) **Abstract**

An apparatus (100; 200) for processing material by means of laser is claimed. Said apparatus comprises a liquid supply chamber (106a) for conveying the liquid to a nozzle (108), where the nozzle (108) forms the liquid jet (106), so that the liquid jet (106) acts as a wave guide for the laser. Further said apparatus comprises an entry window (109) in the liquid supply chamber (106a) for the laser and a focussing unit for focussing the laser through the entry window (109) into the nozzle (108). In order to improve the flexibility of the apparatus (100; 200) concerning processing material, two laser beams are combined with a beam combiner (103; 203) and coupled into the liquid jet (106). Additionally the invention relates to a method for material processing and to a method of aligning said apparatus (100; 200).

## Description

### Technical field

The invention relates to an apparatus for processing material by the means of liquid jet guided laser. Said apparatus comprises
a) a liquid supply chamber for conveying the liquid to a nozzle,
b) the nozzle forming the liquid jet, so that the liquid jet acts as a wave guide for the laser,
c) an entry window in the liquid supply chamber for the laser and
d) a focussing unit for focussing the laser through the entry window into the nozzle.

Additionally the invention relates to a method for material processing and to a method of aligning said apparatus.

### Background Art

The document US 5,258,989 A (Diomed) discloses two laser diodes (1, 2), whose outputs are combined coaxial. After passing a focus lens (19), the combined laser beams are coupled into a fibre (20). For combining the two beams a polarisation beam combiner (11) is used.

The document US 5,258,989 A shows in general the possibility to coaxially overlap two laser beams by using a polarisation beam combiner (beam splitter) and to couple the combined beam into a fibre.

It is known from US 5,902,499 (Synova) how a laser beam with sufficiently high energy for ablating material (particularly for cutting different types of materials) can be coupled into a water jet (or into any jet of an appropriate transparent liquid medium). The laser light is optically guided in the water jet in the same way as a light beam in an optical fibre and impinges on the work piece with an effective diameter substantially corresponding to the diameter of the water jet.

The main elements of the so called LMJ® technology consist in a lens system focussing the laser beam, a relatively thin high-pressure water chamber (also called coupling unit) and a nozzle with a small diameter. A typical nozzle diameter is 20 to 150 micrometers. In addition to its guiding properties, the water jet serves as a cooling medium for the machined part of the work piece and removes in a very efficient way the ablated material, leading to very good machining quality.

In summary the technology of the US 5,902,499 (Synova) combines one laser beam into one liquid jet for material processing. Therefore, the range of possible material processing is mainly defined by the laser power at a working spot delivered by the liquid jet. Even though this arrangement is appropriate for cutting and grooving some materials, for more demanding applications, a greater flexibility in power and characteristic of the water jet coupled laser is needed.

So far in the prior art there is no reference to combine the two technologies of the US 5,258,989 A (Diomed) and the US 5,902,499 (Synova).

### Summary of invention

It is an object of the invention to overcome the above mentioned problems of the prior art and to provide an apparatus and method for material processing with laser, which shows a greater flexibility concerning processing material with the apparatus.

The solution of the problem is achieved according to the claim 1 by an apparatus comprising at least two laser beam entries and a beam combiner for superposing two laser beams entering through the at least two laser beam entries to a superposed laser beam. Said superposed laser beam is fed into the focussing unit and therefore coupled into the liquid jet. In the light of the invention it is not mandatory that the two beams are exactly overlapping in space or in time, but that the two beams are coupled into the liquid jet. In this way the method for material processing according to the invention uses laser beams guided in a liquid jet whereas at least two laser beams are coupled into the liquid jet.

Further the invention comprises a method for aligning said apparatus whereas a beam combining element is used to combine at least two laser beams to form a combined laser beam, a lens system is used for focusing the superposed laser beams into the liquid jet and a light source and an observation tool is used to align the laser beams. The method comprises the following steps:
a) a first laser beam is switched on and is aligned through the beam combing element and
b) a second laser beam is switched on and is aligned to coincide with the first laser beam by adjusting through the beam combining element, whereas the first and the second laser beam form the combined laser beam, and
c) the combined laser beam is focused into the liquid jet.

In an alternative method for aligning the claimed apparatus it is possible to align the first and the second laser beam independently into the liquid jet. For examples the method could comprise the following steps: a) a first laser beam is switch on and focused into the liquid jet and b) a second laser beam is switched on and focused into the liquid jet.

By coupling at least two laser beams into the liquid jet the range of applications of the apparatus for material processing is broadened. Firstly, by using identical laser sources the available power is increased. Additionally it might be cheaper combining two laser sources with less power than one laser source with higher power.

Secondly by using two different laser sources the material processing can be improved because different lasers can take part in different tasks of the material processing. These tasks can be done either simultaneously or temporally delayed. For example a laser pulse of the first laser can be used as a pre-pulse for a laser pulse of the second laser.

Additionally by coupling the two laser beams into the liquid jet, the beam combiner does not have to overlap both beams exactly in space. Once they are coupled into the liquid jet, the two laser beams fill out the whole cross section of the liquid jet and therefore working spots of the two lasers are exactly the same. This is in opposite to direct laser processing with two lasers, where a beam combiner has to combine the laser beams exactly in space or more than one working spot of the lasers will be the result.

Further, due to the use of one liquid jet, the working spot of the laser on the material is well defined for all laser beams together. There is no risk of having more than one focus spot of the superposed laser beams on the material. Therefore the apparatus comprises all the advantages of the liquid jet guided laser technology.

According to the preferred embodiment of the invention each of the laser beam entries defines a beam path with an optical axis that is parallel to a jet axis of the liquid jet. This has the advantage of a space-saving arrangement of the apparatus.

In an alternative embodiment the optical axis of at least one of the laser beam entries can be at an angle, in particular orthogonal, to the optical axis of the other laser beam and therefore also at an angle with respect to the jet axis. This might reduce the number of optical mirrors in the apparatus. Generally speaking, it is not mandatory that each one of the laser beam entries is parallel to the jet axis of the liquid jet.

According to the preferred embodiment of the invention the optical axis of one of the laser beam entries is on the axis of the liquid jet. This has the advantage of limiting the use of guiding optics, especially tilted mirrors to guide the laser to the focussing unit for focussing the laser through the entry window into the nozzle.

Alternatively none of the optical axis of the laser beam entries is on the axis of the liquid jet.

According to the preferred embodiment of the invention the beam combiner comprises a tilted mirror, which is transparent for a first laser beam propagating in a first of the beam paths and reflecting for a second laser beam propagating in a second of the beam paths. Such a tilted mirror with a selective characteristic in respect to laser light is a simple way to superpose two laser beams. In this way the laser beam paths of the different laser beam entries are overlapping after the beam combiner. The said tilted mirror might be selective in polarisation, i. e. the mirror might be high reflective for examples for s-polarised light and high transparent for p-polarised light. The said mirror might be a dichroic mirror as well, which is selective concerning the wavelength, i. e. the dichroic mirror has a high reflectivity for one wavelength and a high transmittance for another wavelength under a certain angle of incidence, particularly under an angle of incidence of 45°.

Alternatively more sophisticated beam combiner can be used. For examples beam combiner based on the different type of beam splitters are possible. Further a beam combiner could comprise a rotating mirror which alternatively reflects the first and the second laser beam onto the focussing unit. More laser beams can be combined by one or more beam combiner. The different laser beam entry might be positioned star like around the beam combiner, as well.

According to the preferred embodiment of the invention the apparatus comprises two additional tilted mirrors arranged after said beam combiner for introducing the superposed laser beams into the focussing unit. The two tilted mirrors provide a simple means for aligning the superposed laser beam into the focussing unit.

Alternatively the superposed laser beam after passing the beam combiner can propagate along the jet axis. In this case either tilted mirrors are used before the beam combiner or the laser beam entries comprise a mechanism, in particular translation and tilting means, for aligning the laser beams.

According to the preferred embodiment of the invention the apparatus comprises a camera which is arranged parallel to the optical axis of the laser beam entries. Said camera supervises the coupling in of the superposed laser beams into the liquid jet. This enables a direct view on the coupling process, where the focussing of the laser beams into the entrance of the nozzle can be supervised. Therefore a real-time adjusting system is provided.

Alternatively the camera can be placed at different places, in particular behind any of the tilted mirrors. Further it is imaginable as well that the alignment is done in a different way.

According to the preferred embodiment of the invention the apparatus comprises a light source which is arranged along the jet axis of the liquid jet. In the case that the second laser beam entry is in line with the jet axis, the light source can be placed around the second beam entry. In the case of using two tilted mirrors after the beam combiner, the light source can be place behind the second tilted mirror. Placing a light source close to the jet axis has the advantage of illuminating the jet axis as well as an entrance of the nozzle, thus helping the observation by the camera of coupling the laser beam into liquid jet.

Alternatively, depending on the set-up and the type of camera for observation the light source for illumination the entrance of the nozzle can be omitted. Additionally different positions of the light source are imaginable. For example the light source might be placed in such a way that the beam combiner is illuminated as well.

According to the preferred embodiment of the invention the light source is placed behind the second additional tilted mirror on the jet axis. This has the advantage that the entrance of the nozzle is directly illuminated and back-reflections of the light of the light source from the entrance of the nozzle are reflected into the camera by the second additional tilted mirror.

According to the preferred embodiment of the invention the light source is placed around the first laser beam entry which is in line with the jet axis. This has the advantage that in the case that two additional tilted mirrors are used after the beam combiner the entrance of the nozzle is also directly illuminated. Back-reflections of the light of the light source from the entrance of the nozzle are reflected into the camera by the beam combiner.

According to the preferred embodiment of the invention the apparatus comprises an adjustment mechanics for moving the focussing unit relative to the beam combiner. This allows separating the aligning of the beam combiner for superposing the laser beams and focussing the superposed laser beam into the focusing system. The simplest case would be two tilted mirrors after the beam combiner.

Alternatively the beam combiner and/or the laser beam entries can comprise an adjustment mechanics for adjusting the superposed laser beam into the focussing system.

According to the preferred embodiment of the invention the machine head is provided with a gas application chamber for applying a gas jacket to the liquid jet ejected by the nozzle. This has the advantage of stabilising the liquid jet. A detailed description of this feature can be found in the patent US 5,902,499 (Synova).

According to the preferred embodiment of the invention the method comprises two laser beams which are different with respect to wavelength, continuous/pulse mode and/or energy level. This has the advantage that different characteristics of the laser sources can be used for material processing. Without realigning the machine different work can be done on the material either at the same time or temporally delayed. For examples if laser in pulsed mode are used, then a pulse of one laser can be used as a pre-pulse for a pulse of the second laser.

Alternatively the laser beams can only differ in polarisation or they might be identical.

The following description of the preferred embodiments and the combination of the claims contain further advantageous features and effects of the invention.

### Short description of the drawings

The drawings, which are used to explain more details of the invention, show the following aspects:
- Fig. 1: a first embodiment of the invention, where a first laser beam entry is aligned with a jet axis,
- Fig. 2: a second embodiment of the invention, where the laser beam entries are parallel but not aligned with the jet axis,
- Fig. 3: detailed drawing of the focussing unit, water chamber and a liquid jet producing nozzle.

Same reference numerals designate identical parts in the Figures.

### Preferred embodiments

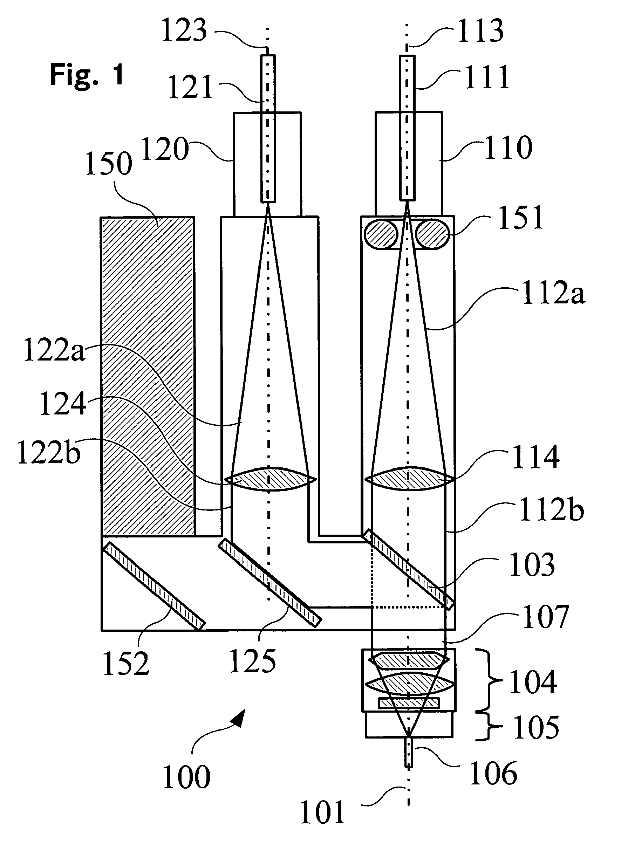

Figure 1 shows a first apparatus 100 of the apparatus of the invention, where a first laser beam entry 110 is in line with a jet axis 101 of a liquid jet. In this embodiment 100 the liquid jet is a water jet 106. The first laser beams entry 110 is formed in such a way that a first optical fibre 111 can be connected to it. An output beam of e. g. a Nd:YAG laser (not shown), emitting laser light at a wavelength of 1064 nm, is coupled into the optical fibre 111. The first laser beam entry 110 has translation and tilting means for adjusting a first laser beam 112a emitted by the first optical fibre 111. The first laser beam 112a is adjusted along a first optical axis 113 which is in line with the jet axis 101.

A first collimating lens 114 collimates the divergent first laser beam 112a of the optical fibre 111 to a first collimated laser beam 112b. After the first collimating lens 114 the first collimated laser beam 112b enters a focussing lens system 104, where the first collimated laser beam 112b is focussed through a coupling unit 105 into the water jet 106. The technical details of a machine head comprising the focusing lens system 104 and the coupling unit 105 producing a water jet 106 are known from document US 5,902,499 (Synova) which is incorporated herein by reference. The coupling unit 105 mainly comprises a window (not shown) for the laser beam to enter into a stagnation free water chamber (not shown) and a nozzle (not shown) for producing a water jet 106. A laser beam is coupled into the water jet 106 by focussing on an entrance of the nozzle. Further due to the absence of a retaining chamber in an area surrounding the entrance of the nozzle, a sufficiently high flow speed of the liquid in this area makes sure that a formation of a thermal lens in the water is suppressed.

Between the collimating lens 114 and the focussing system 104 a beam combiner, formed as a tilted dichroic mirror 103, is inserted under an angle of incidence of 45°. The dichroic mirror 103 is highly transparent for light at a wavelength of 1064 nm and highly reflecting for light at a wavelength of 532 nm under an angle of incidence of 45°. Mirrors with such features are well known to a person skilled in the art.

Next to the first laser beam entry 110 a second laser beam entry 120 in the form of a fibre holder is placed. A second optical fibre 121 is connected to the second laser beam entry 120. A second output beam of a frequency doubled Nd:YAG laser (not shown) emitting light at a wavelength of 532 nm is coupled into the second optical fibre 121.

The second laser beam entry 120 has translation and tilting means for adjusting a second laser beam 122a emitted by the second optical fibre 121. The second laser beam 122a is adjusted along a second optical axis 123 which is parallel to the liquid jet axis 101. A second collimating lens 124 collimates the divergent second laser beam 122a of the second optical fibre 121 to a second collimated laser beam 122b. After the second collimating lens 124 the second collimated laser beam 122b passes a first tilted high reflecting mirror 125, which reflects the second collimated laser beam 122b perpendicular to the liquid jet axis 101 onto the dichroic mirror 103. Because the dichroic mirror 103 is highly reflective for the wavelength of 532 nm the second collimated laser beam 122b is reflected parallel to the jet axis 101, in line with the first collimated laser beam 112b. The first and the second collimated laser beam 112b, 122b propagate together as a superposed laser beam 107 towards the coupling unit 106 passing the focussing lens system 104. The superposed laser beam 107 is focussed on the entrance of the nozzle 108 and therefore coupled into the water jet 106.

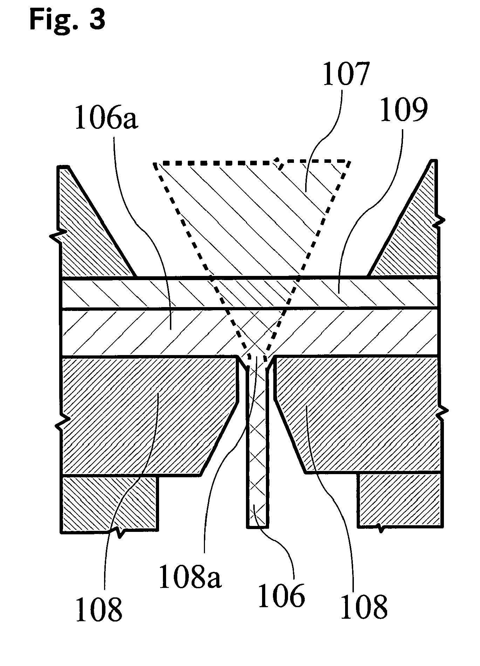

Figure 3 shows a more detailed drawing of the coupling unit and the nozzle. A detailed description of it, can be found in US 5,902,499 (Synova), column 6, line 23 to column 8, line 11. It mainly comprises a focussing unit 104, a window 109, a stagnation free water chamber 106a and a nozzle 108. Water flows from a tank (not shown) through the stagnation free water chamber 106a and through the nozzle 108, where a water jet 106 is produced. The focussing unit 104 focus a laser beam through the window 109 onto an entrance of the nozzle 108a.

A camera 150 for observation is placed next to the second laser beam entry 120, opposite to the first laser beam entry 110. Further the camera 150 is in parallel to the optical axis of the first and second entries 110, 120. Images of the entrance of the nozzle are reflected by the dichroic mirror 103 and a second tilted mirror 152, which is placed behind the first tilted mirror 125, into the camera 150. A light source in the form of a ring LED 151 around the first laser beam entry 110 is used to illuminate the entrance of the nozzle.

The apparatus 100 is aligned with the following steps: The first Nd:YAG laser emitting light at 1064 nm is switched on and coupled into the first optical fibre 111, which is connected to the first laser beam entry 110. With the translation means the output of the first optical fibre 111 is positioned on the jet axis 101 whereas with the tilting means the first optical fibre 111 is tilted in such a way that the first output beam 112a is in line with the jet axis 101. Therefore it is focussed by the focussing system 104 onto the entrance of the nozzle 108a and coupled into the water jet 106.

Then the second frequency doubled Nd:YAG laser is switched on and coupled into the second optical fibre 121 which is connected to the second laser beam entry 120. Together with the translating and tilting means of the second laser beam entry 120 and the first tilted mirror 125 the second laser beam 122a is adjusted similar to the first laser beam 112a in a such a way that after the beam combiner 103 the second collimated laser beam 122b laser is in line with the first collimated laser beam 112b forming the superposed laser beam 107 which is in line with the liquid jet axis 101. Therefore the second collimated laser beam 122b is coupled into the water jet 106 as well.

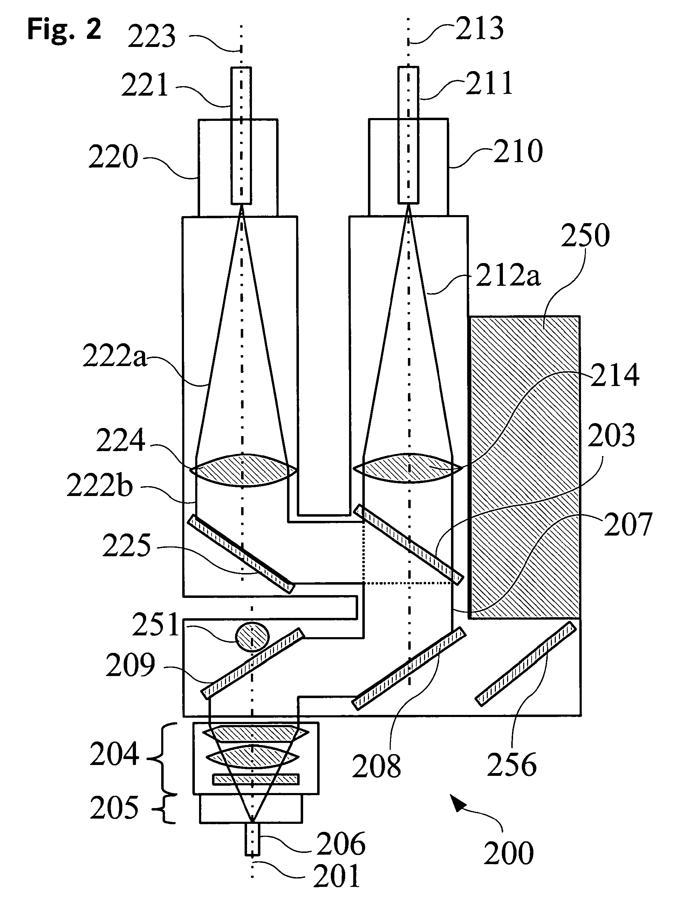

Figure 2 shows a second embodiment 200 of the invention. The arrangement of a first and a second laser beam entries 210, 220, a first and a second optical fibre 211, 221, a first and a second collimated lens 214, 224, a dichroic mirror 203 and a first tilted mirror 225 is the same as in the first embodiment 100, with the exception that a first optical axis 213 of the first laser beam entry 210 is only parallel but not in line with the liquid jet axis 201. Similar to the first embodiment 100 a first laser beam 212a with a wavelength of 1064 nm is emitted by the first optical fibre 211, collimated as a first collimated laser beam 212b by the first collimating lens 214. Afterwards the first collimated laser beam 212b passes the dichroic mirror 203. A second laser beam 222a with a wavelength of 532 nm is emitted by the second optical fibre 221, collimated as a second collimated laser beam 222b by the second collimating lens 224. The second collimated laser beam 222b is reflected by the first tilted mirror 225 onto the dichroic mirror 203, which reflects the second collimated laser beam 222b in line with the first collimated laser beam 212b. Both beams propagate together as superposed laser beams 207.

After the dichroic mirror 203 the superposed laser beam 207 is reflected by a third and a forth tilted mirror 208, 209 before directed through the focussing lens system 204 and focussed on the entrance of the nozzle.

A camera 250 for observation is placed next to the first laser beam entry 210. Images of the entrance of the nozzle, which are reflected by the forth tilted mirror 209 and by a fifth tilted mirror 255, which is placed behind the third tilted mirror 208, into the camera 250. A light source in the form of a LED 256, placed behind the forth tilted mirror 209, in line with the liquid jet axis 201, is used to illuminate the entrance of the nozzle.

For aligning the apparatus according to the second embodiment 200 first the Nd:YAG laser emitting at 1064 nm is switched on. With the translation and tilting means of the first laser beam entry 210 the output laser beam 212a from the first optical fibre 211 is directed through the collimating lens 224 and the dichroic mirror 203. Afterwards the third and forth tilted mirrors 208, 209 are used to direct the collimated beam 222b through the focussing lens system 204 onto the entrance of the nozzle before it is coupled into the water jet 206. A LED 256 illuminates the entrance of the nozzle. Therefore the adjustement of the collimated laser beam 212b is observed by the camera 250. Once the laser beam 212b is successfully coupled into the water jet 206, the second frequency doubled Nd:YAG laser emitting laser light at a wavelength of 532 nm is switched on and coupled into the second optical fibre 223. By using the translation and tilting means of the second laser beam entry 220 the second laser beam 222a is directed trough the second collimated lens 224, reflected by the first tilted mirror 225 and the dichroic mirror 203. After the reflection at the dichroic mirror 203, the second collimated laser beam 222b is in line with the first collimated laser beam 212b. Therefore the second collimated laser beam 222b is coupled into the water jet 206 as well.

Although the embodiments show the superposition of two laser beams, which are coupled into the water jet, the superposition of more than two laser beams are conceivable. The method to combine more than two laser beams depends on the used laser sources. For example it is imaginable that twice two laser beams with different wavelength are combined together with a dichroic mirror and that afterwards the two combined beams are superposed by a polarisation depending mirror. Once all laser beams are combined together, they are focused on the entrance of the nozzle and therefore coupled into the liquid jet.

It is not mandatory that the different laser beams are exactly overlapping each other after the beam combiner. The important thing is that all the laser beams are coupled into the liquid jet, even though their optical paths are not exactly the same. Once coupled into the liquid jet, the laser beams will naturally overlap. Therefore it is possible to use a beam combining method where each laser beam path is still spatially separated but all laser beams are focused into the liquid jet.

As the different laser beams do not need to overlap after the beam combiner, it is imaginable that more than one focussing system for focusing the laser beam onto the entrance of the nozzle is used.

Although in the two embodiments the laser beam was delivered from the laser source to the laser beam entry by an optical fibre, it is possible that the laser source is directly placed at the laser beam entry or delivered there by tilted mirrors.

Although a dichroic mirror is theoretically 100% reflecting for one wavelength and 100% transparent for the other wavelength, in reality this is not exactly true. Of each wavelength there is always a part of the light, which is passing the dichroic mirror and reflected by the dichroic mirror, respectively. This is true for a normal, high reflecting and tilted mirror as well. Therefore an image of the entrance of the nozzle can be observed by the camera placed behind a tilted mirror.

In the embodiments the dichroic mirror is high reflecting the wavelength of 532 nm and high transparent for the wavelength at 1064 nm. Dichroic mirror with different reflectivity and transparency at different wavelength are possible according to the different lasers which are used. It is not mandatory that the dichroic mirror is highly reflecting at the SHG, where it is highly transparent. There are dichroic mirrors with well defined ranges, where they are highly reflecting and highly transparent, respectively.

In general any liquid for producing the liquid jet is possible as long as the absorption coefficient of the liquid concerning the used wavelengths is small enough that together with a sufficiently high flow speed of the liquid in an area surrounding the entrance of the nozzle a formation of a thermal lens is suppressed.

In summary an apparatus is provided who shows a greater flexibility for material processing using liquid jet guided laser.

## Claims

1. Apparatus (100; 200) for processing material by means of laser which is guided in a liquid jet (106;206), wherein a machine head comprises
a) a liquid supply chamber for conveying the liquid to a nozzle
b) the nozzle forming the liquid jet, so that the liquid jet acts as a wave guide for the laser light
c) an entry window in the liquid supply chamber for the laser light,
d) and a focussing unit (105; 205) for focussing the laser light through the entry window into the nozzle,
**characterized in that** the machine head comprises
e) at least two laser beam entries (110, 120; 210, 220) and
f) a beam combiner (103; 203) superposing two laser beams (112b, 122b; 212b, 222b) entering through the at least two laser beam entries (110, 120; 210, 220) and feeding the two laser beams (112b, 122b; 212b, 222b) into the focussing unit (105; 205).

2. Apparatus (100; 200) according to claim 1, **characterized in that** each of the laser beam entries 110, 120; 210, 220) defines a beam path with an optical axis (113, 123; 213, 223) that is parallel to a jet axis (101; 201) of the liquid jet (106; 206).

3. Apparatus (100; 200) according to claim 2, **characterized in that** one of the optical axis of the laser beam entries (113; 213) is on the jet axis (101, 201) of the liquid jet (106; 206).

4. Apparatus (100; 200) according to claim 2 or 3, **characterized by** the beam combiner (103, 203) comprising a tilted mirror, which is transparent for a first laser beam (112b; 212b) propagating in a first of the beam paths and reflecting for a second laser beam (122b; 222b) propagating in a second of the beam paths.

5. Apparatus (100; 200) according to on of the claims 1 to 5, **characterized by** two additional tilted mirrors (208, 209) arranged after said beam combiner (203) for introducing the superposed laser beams (207) into the focussing unit (204).

6. Apparatus (100; 200) according to the claims 1 to 5, **characterized by** a camera (150; 250) arranged parallel to the optical axis (113, 123; 213, 223) of the laser beam entries (110, 120; 210, 220), said camera (150; 250) supervising the operation of the focussing unit (104; 204).

7. Apparatus (100; 200) according to claim 6, **characterized by** a light source (151) arranged close to the optical axis of the liquid jet (101; 201) entry at the first beam path (110).

8. Apparatus (100; 200) according to claim 3 and 7, where the light source (151) is arranged around the first laser beam entry (110).

9. Apparatus (100; 200) according to claim 5 and 7, where the light source (256) is arranged behind the second additional tilted mirror (209).

10. Apparatus (100; 200) according to one of the claims 1 to 9 **characterized by** an adjustment mechanics for moving the focussing unit (104; 204) relative to the beam combiner (103; 203).

11. Apparatus (100; 200) according to one of the claims 1 to 10 **characterized in that** the machine head is provided with a gas application chamber for applying a gas jacket to the liquid jet (106; 206) ejected by the nozzle.

12. Method for processing material using laser beams guided in a liquid jet **characterized in that** at least two laser beams (112b, 122b; 212b, 222b) are coupled into the liquid jet (106; 206).

13. Method according to claim 12, **characterized in that** the at least two laser beams (112b, 122b; 212b, 222b) are different with respect to wavelength, continuous/pulse mode, energy level.

14. Method for aligning an apparatus (100; 200) according to one of the claims 1 to 13 whereas a beam combining element (103; 203) is used to combine at least two laser beams (1 12b, 122b; 212b, 222b) to form a combined laser beam, a lens system (104; 204) is used for focusing the combined laser beams (107; 207) into the liquid jet (106; 206) and a light source (151; 256) and an observation tool (150; 250) is used to align the laser beams (1 12b, 122b; 212b, 222b) **characterized by** the following steps:
a) a first laser beam is switched on and is aligned through the beam combing element (10;203) and
b) a second laser beam is switched on and is aligned to coincide with the first laser beam by adjusting through the beam combining element (103;203), whereas the first and the second laser beam form the combined laser beam (107; 207), and
c) the combined laser beam (107; 207) is focused into the liquid jet (106; 206).
